(19) Europäisches Patentamt
European Patent Office
Office européen des brevets

(11) EP 2 848 124 A1

(12) # EUROPÄISCHE PATENTANMELDUNG

(43) Veröffentlichungstag:
**18.03.2015 Patentblatt 2015/12**

(51) Int Cl.:
***A01N 43/08*** $^{(2006.01)}$ ***A01N 43/40*** $^{(2006.01)}$

(21) Anmeldenummer: **14181380.8**

(22) Anmeldetag: **19.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer CropScience AG**
**40789 Monheim am Rhein (DE)**

(72) Erfinder: **Die Erfindernennung liegt noch nicht vor**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Wirkstoff zur Bekämpfung von Rhynchophorus ferrugineus**

(57) Die vorliegende Erfindung bezieht sich auf neue Verwendungen der Verbindung der Formel (a) zur Bekämpfung von *Rhynchophorus ferrugineus*

EP 2 848 124 A1

**Beschreibung**

Die vorliegende Anmeldung betrifft die Verwendung von Flupyradifurone zur Bekämpfung von *Rhynchophorus ferrugineus.*

**Hintergrund**

Flupyradifurone

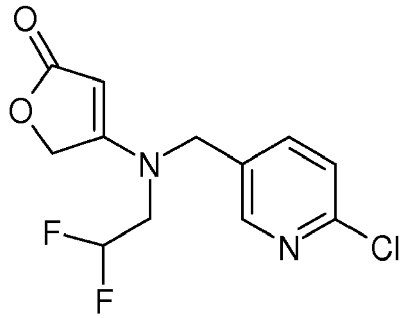

(Verbindung (I))

seine Herstellung sowie strukturell ähnliche Verbindungen sind aus WO 2007/115644 bekannt. Weitere Verwendungen dieser Verbindung sind ferner in WO 2010/051926 offenbart.

Verbindungen (II) und (III) sind z. B. aus EP 0 539 588 bekannt

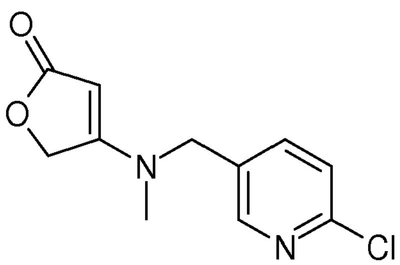

;

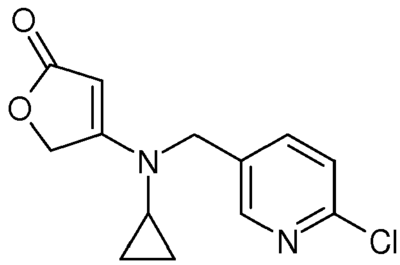

(II) (III)

*Rhynchophorus ferrugineus* ist ein Käfer aus der Familie der Dryophthoridae, die zu den Rüsselkäfern im weiteren Sinne (oder Rüsselkäferartigen) (Überfamilie Curculionoidea) gehören. Ursprünglich aus Asien stammend, verbreitete er sich in nur wenigen Jahren fast weltweit, unter anderem auch im Mittelmeerraum und bedroht hier sämtliche Bestände von Palmen.

Die Jugendstadien des Palmrüsslers sind an Palmen gebunden. Das Weibchen legt seine bis zu 300 Eier einzeln oder in kleinen Gelegen in Spalten oder selbst ausgefressenen Hohlräumen in der Palme ab. Nach 2 bis 5 Tagen schlüpfen die Larven. Sie fressen sich durch das Gewebe, bis in den Wachstumskegel an der Stammspitze im Bereich des Blattansatzes. Andere Teile der Pflanze, z.B. Blätter, faserige oder verholzte Stammabschnitte, werden nicht dauerhaft befallen. Das Larvenstadium dauert ein bis drei Monate; die Larve häutet sich dabei sieben bis zwölfmal. Anschließend verpuppt sie sich in einer langgestreckt ovalen und aus Pflanzenfasern bestehenden Puppenkammer. Nach 14 bis 21 Tagen Puppenruhe schlüpfen dann die adulten Käfer (Imagines). Sie sind beinahe ganzjährig anzutreffen, in den gemäßigten Breiten verbleiben sie allerdings oft bis zum Frühjahr in der Puppenkammer.

Der Befall ist in den frühen Stadien äußerlich nicht erkennbar. Sobald Symptome zu sehen sind, ist der Baum in der Regel bereits rettungslos verloren. Zum Ende eines Befalls sterben die Blattwedel ab, der vollkommen aufgebrauchte und zerstörte Wachstumskegel kann keine neuen Blätter mehr ausbilden.

Eine Vielzahl verschiedener Palmenarten werden befallen, darunter auch die ökonomisch bedeutenden Kokospalmen *(Cocos nucifera*), Sagopalmen (*Metroxylon sagu*), Echte Dattelpalmen (*Phoenix dactylifera*) und Silber-Dattelpalmen (*Phoenix sylvestris*). Im Mittelmeerraum wird vor allem die als Zierbaum häufig angepflanzte Kanarische

Dattelpalme (*Phoenix canariensis*) befallen.

Überraschend wurde jetzt wurde gefunden, dass Flupyradifurone oder eine der Verbindungen (II) und (III) besonders gut zur Bekämpfung von *Rhynchophorus ferrugineus* geeignet ist, insbesondere zur Bekämpfung von *Rhynchophorus ferrugineus* in Palmen, bevorzugt auf Palmen ausgewählt aus Kokospalmen *(Cocos nucifera*), Sagopalmen (*Metroxylon sagu*), Echte Dattelpalmen *(Phoenix dactylifera*), Silber-Dattelpalmen (*Phoenix sylvestris*) und Kanarische Dattelpalme *(Phoenix canariensis*). Darüber hinaus besitzt die Verbindung der Formel (a) auch günstige ökotoxikologische Eigenschaften.

## Zusammenfassung

Der Aspekt der vorliegenden Erfindung bezieht sich auf die Verwendung einer Verbindung der Formel (a) (Flupyradifurone oder einer Verbindung der Formel (II) oder (III)) zur Bekämpfung von *Rhynchophorus ferrugineus.*

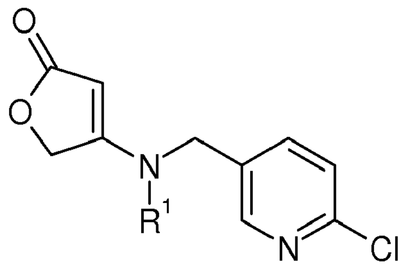

(a)

worin $R^1$ für 2,2.Difluorethyl, Cyclopropyl oder Methyl steht (Flupyradifurone oder einer Verbindung der Formel (II) oder (III)) zur Bekämpfung von *Rhynchophorus ferrugineus.*

Eine bevorzugte Ausführungsform bezieht sich auf die Verwendung der Verbindung der Formel (a) nach Anspruch 1, worin $R^1$ für 2,2-Difluorethyl steht (Flupyradifurone) zur Bekämpfung von *Rhynchophorus ferrugineus.*

Eine weitere bevorzugte Ausführungsform bezieht sich auf die Verwendung der Verbindung der Formel (a) wie hierin beschrieben zur Bekämpfung von *Rhynchophorus ferrugineus*.in Palmen.

Eine weitere bevorzugte Ausführungsform bezieht sich auf die Verwendung der Verbindung der Formel (a) wie hierin beschrieben zur Bekämpfung von *Rhynchophorus ferrugineus*.in Palmen, dadurch gekennzeichnet, dass die Palme ausgewählt ist aus der Gruppe bestehend aus Kokospalme (*Cocos nucifera*), Sagopalme (*Metroxylon sagu*), echte Dattelpalme *(Phoenix dactylifera),* Silber-Dattelpalme (*Phoenix sylvestris*) und Kanarische Dattelpalme (*Phoenix canariensis*).

Ein weiterer Aspekt bezieht sich auf ein Verfahren zur Bekämpfung von *Rhynchophorus ferrugineus* dadurch charakterisiert, dass man eine Verbindung der Formel (a) wie hierin beschrieben auf die Schädlinge oder ihren Lebensraum (mindestens eine Palme) einwirken lässt.

Eine bevorzugte Ausführungsform bezieht sich auf dieses Verfahren, wobei die Palme ausgewählt ist aus der Gruppe bestehend aus Kokospalme *(Cocos nucifera*), Sagopalme (*Metroxylon sagu*), echte Dattelpalme (*Phoenix dactylifera),* Silber-Dattelpalme (*Phoenix sylvestris*) und Kanarische Dattelpalme (*Phoenix canariensis*).

## Definitionen

"Kultur" Im Sinn der vorliegenden Anmeldung bezieht sich auf eine Pflanzenkultur, insbesondere auf eine Palmkultur. Eine Pflanzenkultur besteht aus mindestens einer Pflanze (oder Pflanzenteilen wie Früchten, Blättern oder Stamm) einer in dieser Anmeldung genannten Gattungen oder Arten. Eine Kultur im Sinne der vorliegenden Anmeldung kann sich somit auf mindestens eine wild wachsende Pflanze (oder Pflanzenteilen wie Früchten) einer in dieser Anmeldung genannten Gattungen oder Arten beziehen; oder kann sich bevorzugt auf mindestens eine Kulturpflanze (oder Pflanzenteilen wie Früchten), d.h. eine Pflanze, die durch das Eingreifen der Menschen zielgerichtet als Nutz- oder Zierpflanze angebaut und/oder züchterisch bearbeitet wurde, beziehen. Eine Kultur im Sinn der vorliegenden Anmeldung kann Teil einer Monokultur oder Teil einer Mischkultur sein. Monokultur ist eine Bezeichnung für die regionale Konzentration der Markterzeugung in der Landwirtschaft auf ein Produkt (z. B. Grüne Bohnen, Äpfel, Birnen, Mandeln, Mais, Baumwolle, Sojabohnen, Tomaten, Paprika oder Trauben). Zumeist versteht der Fachmann unter Monokultur eine Fruchtfolge von Nutzpflanzen, die lediglich aus einer Nutzpflanzenart besteht. Eine Mischkultur kann aus wild wachsenden Pflanzen verschiedener Arten/Gattungen bestehen, die jedoch erfindungsgemäß eine Kultur im Sinn der vorliegenden Anmeldung umfasst oder eine Mischkultur kann aus Kulturpflanzen verschiedener Arten/Gattungen bestehen, die jedoch erfindungsgemäß eine Kultur im Sinn der vorliegenden Anmeldung umfasst.

Bei allen genannten Pflanzen und Kulturen kann es sich auch um transgene Pflanzen bzw. Kulturen handeln, die aus den jeweiligen Pflanzen bzw. Kulturen durch gentechnologische Modifikation hervorgegangen sind.

Die Begriffe "Verbindung der Formel (a)" und "Verbindung (a)" sind austauschbar.

## Detaillierte Beschreibung

Die Verbindung der Formel (a)

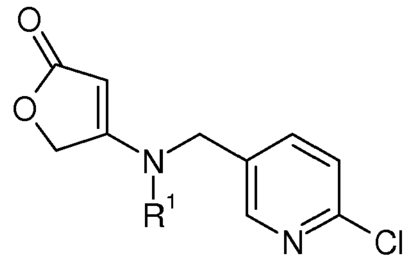

(a)

worin $R^1$ für 2,2.Difluorethyl, Cyclopropyl oder Methyl steht (Flupyradifurone oder einer Verbindung der Formel (II) oder (III)) eignet sich besonders gut zur Verwendung in der Bekämpfung von *Rhynchophorus ferrugineus,* bevorzugt in/auf Palmen, mehr bevorzugt in/auf Palmen wobei die Palme ausgewählt ist aus der Gruppe bestehend aus Kokospalme *(Cocos nucifera*), Sagopalme (*Metroxylon sagu*), echte Dattelpalme (*Phoenix dactylifera),* Silber-Dattelpalme (*Phoenix sylvestris*) und Kanarische Dattelpalme (*Phoenix canariensis*).

In einer bevorzugten Ausführungsform ist eine Verbindung der Formel (a) Flupyradifurone ($R^1$ ist 2,2-Difluorethyl).

Die Verbindung der Formel (a) kann zur Bekämpfung von *Rhynchophorus ferrugineus* auf eine, auf ein oder mehrere bzw. auf mehrere Palmen angewendet werden.

In einer bevorzugten Ausführungsform wird die Verbindung der Formel (a) in Palmkulturen eingesetzt.

Die Verbindung der Formel (a) kann als Reinprodukt oder, bevorzugt, als Formulierung auf Palmen aufgebracht werden. Dabei kann eine Formulierung weitere Insektizide oder Fungizide enthalten.

## Formulierungen

Entsprechend betrifft die vorliegende Erfindung weiterhin die erfindungsgemäße Verwendung der Verbindung der Formel (a) in Form einer Formulierung. Die Verbindung der Formel (a) kann in verschiedenen Anwendungsformen zur erfindungsgemäßen Verwendung, z. B. Drench-, Drip- und Spritzbrühen, umfassend die Verbindung der Formel (a), eingesetzt werden. Gegebenenfalls enthalten die Anwendungsformen weitere Schädlingsbekämpfungsmittel und/oder die Wirkung verbessernde Adjuvantien wie Penetrationsförderer, z. B. vegetative Öle wie beispielsweise Rapsöl, Sonnenblumenöl, Mineralöle wie beispielsweise Paraffinöle, Alkylester vegetativer Fettsäuren wie beispielsweise Rapsöloder Sojaölmethylester oder Alkanol-alkoxylate und/oder Spreitmittel wie beispielsweise Alkylsiloxane und/oder Salze z.B. organische oder anorganische Ammonium- oder Phosphoniumsalze wie beispielsweise Ammoniumsulfat oder Diammonium-hydrogenphosphat und/oder die Retention fördernde Mittel wie z. B. Dioctylsulfosuccinat oder Hydroxypropyl-guar Polymere und/oder Humectants wie z.B. Glycerin und/oder Dünger wie beispielsweise Ammonium-, Kalium- oder Phosphor-enthaltende Dünger.

Übliche Formulierungen sind beispielsweise wasserlösliche Flüssigkeiten (SL), Emulsionskonzentrate (EC), Emulsionen in Wasser (EW), Suspensionskonzentrate (SC, SE, FS, OD), in Wasser dispergierbare Granulate (WG), Granulate (GR) und Kapselkonzentrate (CS); diese und weitere mögliche Formuliertypen sind beispielsweise durch Crop Life International und in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576 beschrieben. Gegebenenfalls enthalten die Formulierungen neben einem oder mehreren Verbindungen der Formel (a) weitere agrochemische Wirkstoffe.

Vorzugsweise handelt es sich um Formulierungen oder Anwendungsformen, welche Hilfsstoffe wie beispielsweise Streckmittel, Lösemittel, Spontanitätsförderer, Trägerstoffe, Emulgiermittel, Dispergiermittel, Frostschutzmittel,

Biozide, Verdicker und/oder weitere Hilfsstoffe wie beispielsweise Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Mittel, die die Retention, das Spreitverhalten, das Anhaften an der Blattoberfläche oder die Penetration fördern.

Diese Formulierungen werden in bekannter Weise hergestellt, z.B. durch Vermischen der Verbindung der Formel (a) mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Formulierungen erfolgt entweder in geeigneten Anlagen oder auch vor oder während der Anwendung.

Als Hilfsstoffe können solche Stoffe Verwendung finden, die geeignet sind, der Formulierung der Verbindung der Formel (a) oder den aus diesen Formulierungen bereiteten Anwendungsformen (wie z.B. gebrauchsfähigen Schädlingsbekämpfungsmitteln wie Spritzbrühen oder Saatgutbeizen) besondere Eigenschaften, wie bestimmte physikalische, technische und/oder biologische Eigenschaften zu verleihen.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (Poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösemittel verwendet werden. Als flüssige Lösemittel kommen im Wesentlichen infrage: Aromaten wie Xylol, Toluol oder Alkylnaphthaline, chlorierte Aromaten oder chlorierte aliphatische Kohlenwasser-stoffe wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole wie Butanol oder Glykol sowie deren Ether und Ester, Ketone wie Aceton, Methylethylketon, Methylisobutylketon oder Cyclohexanon, stark polare Lösemittel wie Dimethylformamid und Dimethylsulfoxid sowie Wasser.

Grundsätzlich können alle geeigneten Lösemittel verwendet werden. Geeignete Lösemittel sind beispielsweise aromatische Kohlenwasserstoffe wie z.B. Xylol, Toluol oder Alkylnaphthaline, chlorierte aromatische oder aliphatische Kohlenwasserstoffe wie z.B. Chlorbenzol, Chlorethylen, oder Methylenchlorid, aliphatische Kohlenwasserstoffe wie z.B. Cyclohexan, Paraffine, Erdölfraktionen, mineralische und pflanzliche Öle, Alkohole wie z.B. Methanol, Ethanol, iso-Propanol, Butanol oder Glykol sowie deren Ether und Ester, Ketone wie z.B. Aceton, Methylethylketon, Methylisobutylketon oder Cyclohexanon, stark polare Lösemittel wie Dimethylsulfoxid sowie Wasser.

Grundsätzlich können alle geeigneten Trägerstoffe eingesetzt werden. Als Trägerstoffe kommen insbesondere infrage: z.B. Ammoniumsalze und natürliche Gesteinsmehle wie Kaoline, Tonerden, Talkum, Kreide, Quarz, Attapulgit, Montmorillonit oder Diatomeenerde und synthetische Gesteinsmehl, wie hochdisperse Kieselsäure, Aluminiumoxid und natürliche oder synthetische Silikate, Harze, Wachse und /oder feste Düngemittel. Mischungen solcher Trägerstoffe können ebenfalls verwendet werden. Als Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Papier, Kokosnussschalen, Maiskolben und Tabakstängel.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z.B. Aerosol-Treibgase wie Halogenkohlenwasserstoffe sowie Butan, Propan, Stickstoff und Kohlendioxid.

Beispiele für Emulgier- und/oder Schaum erzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen und Derivate der Verbindungen enthaltend Sulphate, Sulphonate und Phosphate, z.B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn eine der Verbindungen der Formel (a) und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z.B. Eisenoxid, Titanoxid, Ferrocyanblau und organische Farbstoffe wie Alizarin-, Azo- und Metallphthalocyaninfarbstoffe und Nähr- und Spurennährstoffe wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten wie Gummiarabikum, Polyvinylalkohol, Polyvinylacetat sowie natürliche Phospholipide wie Kephaline und Lecithine und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Humectans, Spreitmittel. Im Allgemeinen können die Verbindungen der Formel (a) mit jedem festen oder flüssigen Zusatzstoff, welches für Formulierungszwecke gewöhnlich verwendet wird, kombiniert werden.

Als Retentionsförderer kommen alle diejenigen Substanzen in Betracht, die die dynamische Oberflächenspannung verringern wie beispielsweise Dioctylsulfosuccinat oder die die Visko-Elastizität erhöhen wie beispielsweise Hydroxypropyl-guar Polymere.

Als Penetrationsförderer kommen im vorliegenden Zusammenhang alle diejenigen Substanzen in Be-tracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der (in der Regel wässerigen) Applikationsbrühe und/oder aus dem Spritzbelag in die Kutikula der Pflanze eindringen und dadurch die Stoffbeweglichkeit (Mobilität) der Wirkstoffe in der Kutikula erhöhen können. Die in der Literatur (Baur et al., 1997, Pesticide Science 51, 131-152) beschriebene Methode kann zur Bestimmung dieser Eigenschaft eingesetzt werden. Beispielhaft werden genannt Alkoholalkoxylate wie beispielsweise Kokosfettethoxylat (10) oder Isotridecylethoxylat (12), Fettsäureester wie beispielsweise Rapsöl- oder Sojaölmethylester, Fettamine Alkoxylate wie beispielsweise Tallowamine-ethoxylat (15) oder Ammonium- und/oder Phosphonium-Salze wie beispielsweise Ammoniumsulfat oder Diammonium-hydrogenphosphat.

Die Formulierungen enthalten bevorzugt zwischen 0,00000001 und 98 Gew.-% der Verbindung der Formel (a), besonders bevorzugt zwischen 0,01 und 95 Gew.-% der Verbindung der Formel (a), ganz besonders bevorzugt zwischen 0,5 und 90 Gew.-% der Verbindung der Formel (a), bezogen auf das Gewicht der Formulierung.

Der Gehalt an der Verbindung der Formel (a) in den aus den Formulierungen bereiteten Anwendungsformen (insbesondere Schädlingsbekämpfungsmittel) kann in weiten Bereichen variieren. Die Konzentration der Verbindung der Formel (a) in den Anwendungsformen kann üblicherweise zwischen 0,00000001 und 95 Gew.-% der Verbindung der Formel (a), vorzugsweise zwischen 0,00001 und 1 Gew.-%, bezogen auf das Gewicht der Anwendungsform, liegen. Die Anwendung geschieht in einer den Anwendungsformen angepaßten üblichen Weise.

## Mischungen

Die Verbindung der Formel (a) kann als solche oder in ihren Formulierungen auch in Mischung mit einem oder mehreren geeigneten Fungiziden, Bakteriziden, Akariziden, Molluskiziden, Nematiziden, Insektiziden, Mikrobiologika, Nützlingen, Herbizide, Düngemitteln, Vogelrepellentien, Phytotonics, Sterilantien, Synergisten, Safenern, Semiochemicals und/oder Pflanzenwachstumsregulatoren verwendet werden, um so z.B. das Wirkungsspektrum zu verbreitern, die Wirkdauer zu verlängern, die Wirkgeschwindigkeit zu steigern, Repellenz zu verhindern oder Resistenzentwicklungen vorzubeugen. Desweiteren können solche Wirkstoffkombinationen das Pflanzenwachstum und/oder die Toleranz gegenüber abiotischen Faktoren wie z. B. hohen oder niedrigen Temperaturen, gegen Trockenheit oder gegen erhöhten Wasser- bzw. Bodensalzgehalt verbessern. Auch lässt sich das Blüh- und Fruchtverhalten verbessern, die Keimfähigkeit und Bewurzelung optimieren, die Ernte erleichtern und Ernteerträge steigern, die Reife beeinflussen, die Qualität und/oder den Ernährungswert der Ernteprodukte steigern, die Lagerfähigkeit verlängern und/oder die Bearbeitbarkeit der Ernteprodukte verbessern.

Weiterhin kann die Verbindung der Formel (a) als solche oder in ihren (handelsüblichen) Formulierungen sowie in den aus diesen Formulierungen bereiteten Anwendungsformen in Mischung mit weiteren Wirkstoffen oder Semiochemicals, wie Lockstoffen und/oder Vogelrepellentien und/oder Pflanzenaktivatoren und/oder Wachstumsregulatoren und/oder Düngemitteln und/oder Synergisten vorliegen. Gleichfalls können die Verbindung der Formel (a) und ihre Zusammensetzungen in Mischungen mit Mitteln zur Verbesserung der Pflanzeneigenschaften wie zum Beispiel Wuchs, Ertrag und Qualität des Erntegutes eingesetzt werden.

## Pflanzen und Pflanzenteile

In der erfindungsgemäßen Verwendung können alle Pflanzen und Pflanzenteile mit einer Verbindung der Formel (a) behandelt werden. Unter Pflanzen werden hierbei alle Pflanzen und Pflanzenpopulationen verstanden wie erwünschte und unerwünschte Wildpflanzen oder Kulturpflanzen (einschließlich natürlich vorkommender Kulturpflanzen), beispielsweise Mais, Soja, Tomaten und andere Gemüsesorten, Baumwolle, sowie Obstpflanzen (mit den Früchten Äpfel, Birnen, und Trauben oder Steinobst, z. B. Mandeln). Kulturpflanzen können Pflanzen sein, die durch konventionelle Züchtungs-

und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Für die erfindungsgemäße Verwendung mit der Verbindung der Formel (a) erfolgt die Behandlung der Pflanzen und Pflanzenteile mit der Verbindung der Formel (a) direkt oder durch Einwirkung auf deren Umgebung, Lebensraum oder Lager-raum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Wie bereits oben erwähnt können erfindungsgemäß alle Pflanzen und deren Teile behandelt werden. In einer bevorzugten Ausführungsform werden wild vorkommende oder durch konventionelle biologische Zuchtmethoden wie Kreuzung oder Protoplastenfusion erhaltene Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert. Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein. Zu den transgenen Pflanzen zählen insbesondere Bt-Pflanzen, die durch das genetische Material aus *Bacillus Thuringiensis* (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) Bt-toxine in den Pflanzen erzeugen. Bevorzugt sind Pflanzen, die Gene CryIA(a), CryIA(b), CryIA(c) enthalten. Die jeweils die gewünschten Eigenschaften ("Traits") verleihenden Gene können auch in Kombinationen miteinander in den transgenen Pflanzen vorkommen.

Die gute Wirkung der Verbindung der Formel (a) gegen *Rhynchophorus ferrugineus* in entsprechenden Kulturen geht aus den nachfolgenden Beispielen hervor:

**Beispiel 1**

***Rhynchophorus ferrugineus* - Test; Freiland Spritzbehandlung**

Zur Herstellung einer zweckmäßigen Wirkstoffzubereitung wurde 1 Gewichtsteil Wirkstoff mit den angegebenen Mengen Wasser auf die gewünschte Konzentration verdünnt.

Fünfzehn (15) Palmen (*Phoenix dactylifera*) im Alter von zwölf (12) bis fünfzehn (15) Jahren mit Symptomen von *Rhynchophorus ferrugineus* Befall (Löcher, Holzfragmente oder Holzstaub, sichtbare *Rhynchophorus ferrugineus*) wurden sechs (6) mal jeweils mit 20 Liter Wasser/Woche sechs (6) Wochen lang mit Verbindung (I) oder Imidacloprid bewässert. Als Kontrolle diente jeweils eine Blindkontrolle mit reinem Wasser. Je drei Palmen wurden pro Versuch verwendet. Die Versuchsreihe wurde in Jordanien durchgeführt.

Nach 6 Wochen wurden die Palmen mit Kettensägen gefällt, die Stämme längs aufgeschnitten und in 15 cm dicke Scheiben zerteilt. Lebende und tote *Rhynchophorus ferrugineus* in Form ihrer verschiedenen Larvenstadien, Puppen und in Form ihrer adulten Form wurden gezählt (Puppen wurden 3 Wochen bei Raumtemperatur inkubiert und danach die Mortalitätsrate festgestellt).

Sun-Shepard's Formel für nicht uniforme Populationen wurde als Korrekturfaktor verwendet:

$$\text{Korrekturfaktor \%} = \left( \frac{\text{Mortalität \% in B} \pm \text{Änderung der Population in K}}{100 \pm \text{Änderung der Population in K}} \right) * 100$$

B = behandelte Parzellen
K = unbehandelte Kontrollparzellen

Folgende Behandlungen mit Verbindung (I) wurden gegen den Standard Imidacloprid durchgeführt:

| Behandlung | Anzahl behandelter Palmen | Konzentration |
|---|---|---|
| T1: Verbindung (I) | 3 | 2g a.i. in 201 |
| T2: Verbindung (I) | 3 | 4 g a.i in 201 |
| T3: Verbindung (I) | 3 | 8 g a.i in 201 |
| T4: Imidacloprid 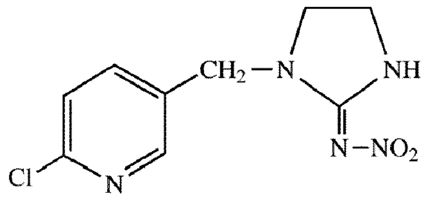 | 3 | 7 g a.i. in 201 |
| T5: Wasser | 3 | control |

Mit Sun-Shepard's Formel korrigierte Mortalität in [%] von *Rhynchophorus ferrugineus*

| Behandlung g a.i. | Total Larven | Puppen | Adult |
|---|---|---|---|
| T1 (2g Verb. (I)) | 0.00 | 0.0 | 21.40 |
| T2 (4g Verb. (I)) | 16.6 | 11.0 | 3.03 |
| T3 (8g Verb. (I)) | 55.57 | 16.7 | 33.3 |
| T4 (7g Imidacloprid) | 16.60 | 0.0 | 0.00 |
| T5: (0g a.i.) | 0.0 | 0.0 | 0.00 |

**Patentansprüche**

1. Verwendung der Verbindung der Formel (a)

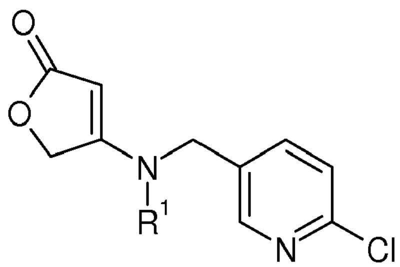

(a)

worin $R^1$ für 2,2.Difluorethyl, Cyclopropyl oder Methyl steht zur Bekämpfung von *Rhynchophorus ferrugineus.*

2. Verwendung der Verbindung der Formel (a) nach Anspruch 1, worin $R^1$ für 2,2-Difluorethyl steht.

3. Verwendung der Verbindung der Formel (a) nach Anspruch 1 oder Anspruch 2, zur Bekämpfung von *Rhynchophorus ferrugineus.*in Palmen.

4. Verwendung nach Anspruch 3, **dadurch gekennzeichnet, dass** die Palme ausgewählt ist aus der Gruppe bestehend aus Kokospalme *(Cocos nucifera*), Sagopalme (*Metroxylon sagu*), echte Dattelpalme (*Phoenix dactylifera),* Silber-Dattelpalme (*Phoenix sylvestris*) und Kanarische Dattelpalme (*Phoenix canariensis*).

**5.** Verfahren zur Bekämpfung von *Rhynchophorus ferrugineus* dadurch charakterisiert, dass eine Verbindung der Formel (a) gemäß Anspruch 1 oder Anspruch 2 auf die Schädlinge oder ihren Lebensraum (mindestens eine Palme) einwirken lässt.

**6.** Verfahren gemäß Anspruch 5, wobei die Palme ausgewählt ist aus der Gruppe bestehend aus Kokospalme *(Cocos nucifera*), Sagopalme (*Metroxylon sagu*), echte Dattelpalme (*Phoenix dactylifera*), Silber-Dattelpalme *(Phoenix sylvestris*) und Kanarische Dattelpalme *(Phoenix canariensis*).

Europäisches Patentamt
European Patent Office
Office européen des brevets

# EUROPÄISCHER RECHERCHENBERICHT

Nummer der Anmeldung
EP 14 18 1380

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "Insecticide Flupyradifurone Technical Information", , 19. Juni 2013 (2013-06-19), XP055154961, Gefunden im Internet: URL:http://www.sivanto.com/doc/Technical-Information-SIVANTO.pdf [gefunden am 2014-11-25] * das ganze Dokument * * 10.recommendations for use * ----- | 1-6 | INV. A01N43/08 A01N43/40 |
| A | Anonymous: "Innovative products and new approaches to promote sustainability in horticulture - Bayer CropScience", , 18. August 2014 (2014-08-18), XP055154754, Gefunden im Internet: URL:http://www.cropscience.bayer.com/Media/Press-Releases/2014/Innovative-Produkte-und-neue-Ansaetze-fuer-mehr-Nachhaltigkeit-im-Gartenbau.aspx?overviewId=D7EED097-06ED-444F-9333-27DCBE3D91F1&language=de-DE [gefunden am 2014-11-25] * das ganze Dokument * ----- | 1-6 | |

| RECHERCHIERTE SACHGEBIETE (IPC) |
|---|
| A01N |

Der vorliegende Recherchenbericht wurde für alle Patentansprüche erstellt

1

| Recherchenort | Abschlußdatum der Recherche | Prüfer |
|---|---|---|
| München | 25. November 2014 | Butkowskyj-Walkiw, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007115644 A
- WO 2010051926 A
- EP 0539588 A


### In der Beschreibung aufgeführte Nicht-Patentliteratur


- **BAUR et al.** *Pesticide Science,* 1997, vol. 51, 131-152